# EUROPEAN PATENT SPECIFICATION

(11) **EP 2 166 865 B1**
(45) Date of publication and mention of the grant of the patent: **18.03.2015**
(21) Application number: 08774415.7
(22) Date of filing: 27.06.2008
(51) Int. Cl.: A23C 9/133, A23L 1/053, A23L 1/0534, A23L 1/06, A23L 1/212

(54) **STABLE FRUIT PREPARATION WITH HIGH ACACIA GUM CONCENTRATION**
STABILES FRUCHTPRÄPARAT MIT HOHEM AKAZIENGUMMIGEHALT
PRÉPARATION DE FRUITS STABLE À FORTE TENEUR EN GOMME ARABIQUE

(30) Priority: 29.06.2007 FR 0756183; 29.06.2007 US 947043 P
(43) Date of publication of application: 31.03.2010
(73) Proprietor: Compagnie Gervais Danone, 75009 Paris (FR)
(72) Inventor: NOBLE, Olivier, F-91400 Orsay (FR); LYOTHIER, Arnaud, F-92600 Asnieres (FR); DELOFFRE, Fabienne, F-91300 Massy (FR)
(74) Representative: Regimbeau
(86) International application number: PCT/EP2008/058248
(87) International publication number: WO 2009/003932

(56) References cited:
- EP-A- 1 529 443
- US-A- 4 971 810
- US-A- 4 988 530
- US-A1- 2004 253 350
- ANONYMOUS: "CNI Announces the Market Launch of the first nutritional texturizer: EQUACIA (TM)" INTERNET ARTICLE, [Online] XP002468727 Retrieved from the Internet: URL:http://www.npicenter.com/anm/anmviewer .asp?a=17996&print=yes> [retrieved on 2008-02-13]

## Description

The present invention relates to a food product, advantageously a dairy product containing a large quantity of acacia gum.

Dietary fibre consumption is insufficient in Western countries: the average daily consumption is 10 - 15 g while the nutritional recommendation is 25 - 30 g. The incorporation of fibre in everyday food products, such as fresh dairy products, is a means to increase fibre consumption. However, the incorporation of fibre in fermented products is faced with:
- technological difficulties associated with the incorporation of highly texturing fibre or the incompatibility of certain types of soluble fibre (polysaccharides) with dairy proteins (caseins, seric proteins) or plant proteins (e.g. soya) inducing a disturbance in the formation of the structure of the product (referred to as "lactic gel" in the case of fermented dairy products) and inducing a separation of the phase containing the proteins from that containing the gum, leading to the obtention of a product not fit for sale, or
- organoleptic difficulties associated with the poor organoleptic perception of insoluble fibre such as wheat bran, or excessively texturing soluble fibre.

It may also pose digestive tolerance problems for products such as FOS (Fructo-Oligo Saccharides) or inulin.

Acacia gum is one of the most beneficial forms of soluble fibre from a technological (low-texturing gum) and nutritional (good digestive tolerance) point of view. Acacia gum is a natural soluble dietary fibre. It consists of a high-molecular weight (greater than 100,000 Da) branched, compact (low hydrodynamic volume) polysaccharide. Acacia gum, also known as gum arabic, is an exudate of acacia, only purified by means of a physical method well-known to those skilled in the art, comprising steps consisting of grinding, water dissolution, filtration, centrifugation, microfiltration and drying by means of atomisation or granulation. There are two types of acacia gum; acacia seyal gum and acacia senegal gum. They have a slightly different structure. They may, however, be differentiated by a very different rotatory power and by their simple sugar composition (46% arabinose in acacia seyal gum and 24% in acacia senegal gum).

Acacia gum, in addition to the use thereof as a source of fibre, is commonly used in the food processing industry as a stabiliser or as a texturing agent; therefore, it is particularly found in some confectionery and in some beverages.

It is important to note that acacia gum has a relatively compact branched structure, hence a lower viscosity development than for linear-chain types of fibre such as pectin or guar.

US patent application 4,971,810 relates to a process to manufacture yogurts comprising, as a source of fibre, gum arabic (2 g to 6 g of fibre per 226.8 g of end product). The fibre incorporation method in the dairy formulation is a standard method used industrially particularly to incorporate starch and gelatine, and wherein the gum and milk are mixed before the fermentation step. This method does not resolve the technical problem associated with the incompatibility of the fibre with dairy proteins as the fibre content was limited so that the incorporation of the fibre in the dairy product does not encounter any technical or organoleptic difficulties.

The application EP 1 532 864 relates to a light butter or light margarine low-fat dairy product, containing gum arabic. The target products are low-fat products having a characteristic macroscopic structure of an emulsion. This structure is very different to the macroscopic structure of fermented dairy products, which is that of a colloidal solution.

The patent application FR 06/11132 describes the possibility of incorporating large quantities of acacia senegal gum into stirred yogurts, via natural stirred yogurt and concentrated acacia gum suspension mixing process.

However, the incorporation of acacia gum via a fruit preparation, which remains the preferred process on an industrial level, still proves to be problematic.

In fact, acacia gum is not very compatible with the stabilisers conventionally used in fruit preparations: modified starches, pectins, carob gum and xanthan gum. Therefore, it appears to be impossible at the present time to produce stable fruit preparations containing a quantity of acacia gum greater than 8 - 10% by weight. In fact, over these proportions, phase separation in the fruit preparation and, therefore, the presence of an aqueous phase are observed in the fruit preparation. Such a phase separation prevents the industrial use of the fruit preparation.

An additional and non-negligible constraint in industrial terms was taken into account by the inventors. In fact, they wanted to retain a conventional fruit preparation production process so that this invention can be applied easily to current fruit preparation production lines.

Surprisingly, the inventors discovered that it was possible to obtain a stable fruit preparation containing a large quantity of acacia gum (10% to 20%), using, as a stabiliser, a system consisting of non-hydrosoluble cellulose fibre, advantageously wheat fibre, co-dried with acacia gum.

The present invention relates to the invention such as defined by the subject-matter of the claims.

The present disclosure relates to a stable fruit preparation containing
A) between 10 and 22% by weight, particularly between 15 and 22% by weight, of acacia gum with respect to the total weight of the fruit preparation and
B) between 0.5 and 3% by weight, particularly between 0.75 and 2% by weight, of non-hydrosoluble cellulose fibre with respect to the total weight of the fruit preparation.

According to the present invention, the term "fruit preparation" refers to any aqueous suspension containing fruit pieces or purée. According to the present invention, the term "fruit purée" refers to a fermentable, but non-fermented, product obtained by means of straining or any other similar process of the edible part of whole or peeled fruit without removing the juice. The purée may be concentrated and, in this case, is obtained from fruit purée by physically removing a determined proportion of the constituent water.

Advantageously, the fruit is chosen from fruit known to those skilled in the art such as for example apple, orange, red berries, strawberry, peach, apricot, plum, raspberry, blackberry, redcurrant, lemon, grapefruit, banana, pineapple, kiwi, pear, cherry, coconut, passion fruit, mango, fig, rhubarb, melon, tropical fruit, litchi, grapes, blueberry and mixtures thereof.

According to the present invention, the term "stable fruit preparation" refers to a fruit preparation as defined above comprising less than 5% by weight of separated liquid phase after 8 weeks at 10°C with respect to the total weight of the fruit preparation, advantageously less than 3% by weight with respect to the total weight of the fruit preparation, advantageously less than 1% by weight with respect to the total weight of the fruit preparation. The term "separated liquid phase" refers to the transparent aqueous phase appearing at the bottom of the fruit preparation. A product comprising less than 5% by weight of separated liquid phase is considered to be a stable product as there is practically no phase separation.

Therefore, this makes it possible to store the fruit preparation for at least 8 weeks before the subsequent use thereof, for example before the incorporation thereof in a food product such as a fresh dairy product. Therefore, it is not necessary to use the fruit preparation according to the present invention immediately.

Advantageously, the non-hydrosoluble cellulose fibre is chosen from wheat, cotton and wood fibre and mixtures thereof, and more advantageously, it consists of wheat fibre.

Advantageously, the cellulose fibre and part of the acacia gum are in the form of a co-dried mixture. This mixture contains between 5 and 30% by weight of non-hydrosoluble cellulose fibre with respect to the total weight of the mixture, advantageously 20% by weight, and between 70 and 95% by weight of acacia gum with respect to the total weight of the mixture, advantageously 80% by weight. Over 30% of non-hydrosoluble cellulose fibre, the mixture would pose problems in terms of redispersion during the fruit preparation production. Below 5% of non-hydrosoluble cellulose fibres, this mixture would be of no use.

The non-hydrosoluble cellulose fibre acts as a stabiliser in the fruit preparation. However, it only develops its function once dispersed and this dispersion takes place due to the acacia gum in the co-dried mixture. In this way, the co-dried mixture can be considered to act as a stabiliser in the fruit preparation.

Advantageously, the non-hydrosoluble cellulose fibre is wheat fibre. Advantageously, the co-dried mixture used is a wheat fibre / acacia gum system marketed by CNI under the name "Equacia®".

Advantageously, the acacia gum is acacia senegal gum, acacia seyal gum or a mixture thereof. The term "acacia senegal gum" refers to a gum produced from natural exudates or exudates induced by cutting stems or branches of Acacia senegal genus trees. Advantageously, the acacia gum is Fibregum B^{®} marketed by CNI. This ingredient has a fibre content greater than 95% (w/w).

It is important to note that the acacia gum and non-hydrosoluble cellulose fibre contents used according to the invention relate to the acacia gum and non-hydrosoluble cellulose fibre specially added during the product preparation. This concentration does not account for the possible presence of natural fibre contained in the fruits in the fruit preparation.

Advantageously, the fruit preparation, according to the present invention, displays a texture, measured, at 20°C, using a CENCO texturometer (or Bostwick device - possible reference: Fisher Scientific No. 15-347-50), between 5 and 15, preferentially between 5 and 12 (these values are expressed in cm/minute).

This type of texture measurement is commonly used by those skilled in the art. In this case, it is not possible to use conventional viscosity or texture measurement devices as fruit preparations are not homogeneous mixtures.

The higher the CENCO measurement, the greater the liquidity of the preparation.

In an advantageous embodiment, the fruit preparation according to the present invention also comprises sugar or a sweetener and possibly non-cellulose fibre other than acacia gum (fructo-oligosaccharide or FOS, inulin, polydextrose), a colorant, flavouring and/or acidifier.

The sugars are particularly monosaccharides and disaccharides. The monosaccharides include fructose, galactose, glucose. The disaccharides particularly include sucrose.

The present invention also relates to a process to manufacture a fruit preparation as described above, characterised in that it comprises the following step:
- a) heating of the fruit at a temperature between 50 and 70°C,
- b) addition of the following ingredients:
- if required, sugar or sweetener, advantageously in the form of powder or syrup
- a co-dried mixture comprising between 5 and 30% by weight of non-hydrosoluble cellulose fibre with respect to the total weight of the mixture, advantageously 20% by weight, and between 70 and 95% by weight of acacia gum with respect to the total weight of the mixture, advantageously 80% by weight, optionally and partly in the form of powder and/or advantageously in the form of a dispersion in water heated at a temperature between 40 and 70°C, advantageously between 50 and 60°C, or more advantageously at a temperature of 50°C.
- water, if required.
- the remainder of the acacia gum, and, if required, the other non-cellulose fibre, advantageously in the form of powder or concentrated solution
- c) heating of the product obtained in step (b) at a temperature between 70 and 95°C, advantageously between 80 and 90°C, more advantageously at a temperature of 85°C for 3 to 30 minutes, advantageously 5 minutes.
- d) cooling of the mixture obtained in step (c) and
- e) addition of colorant, flavouring and/or acidifier, if required.

The co-dried mixture is as defined above and is obtained by co-drying, which is performed in a manner known to those skilled in the art, advantageously as follows:
- preparation of an acacia gum solution
- preparation of a non-hydrosoluble cellulose fibre dispersion in water
- mixing of the acacia gum solution and the non-hydrosoluble cellulose fibre dispersion and atomisation of said mixture.

Advantageously, 2.5 to 15% by weight of said co-dried mixture, with respect to the total weight of the fruit preparation, and advantageously 5 to 10% by weight with respect to the total weight of the fruit preparation, are added in the fruit preparation.

The present invention also discloses a fruit preparation obtainable by means of the process according to the present invention.

In addition, the present invention relates to the use of the fruit preparation according to the present invention for the manufacture of a food product containing acacia gum and non-hydrosoluble cellulose fibre and a food product containing the fruit preparation according to the present invention.

Advantageously, said food product is a fresh dairy product with fruit, a fermented vegetable product with fruit or a combination thereof, advantageously a fresh dairy product with fruit.

The term "fermented vegetable product" refers to a product based on soya, oat, rice, wheat or barley juice which has undergone one or more fermentations produced by micro-organisms.

Advantageously, it consists of a fermented dairy product.

The term "fermented dairy product" refers more specifically to a fermented dairy product ready for human consumption, i.e. a fermented dairy food. The present application particularly relates to fermented milks and yogurts. Said fermented dairy products may alternatively be cream cheeses or petit-suisse cheeses.

The terms "fermented milks" and "yogurts" refer to their usual meanings in the field of the dairy industry, i.e. products which are intended for human consumption, which are obtained from the acidifying lactic fermentation of a dairy substrate. These products may contain secondary ingredients such as fruit, vegetables, etc. For example, it is possible to refer to French decree No. 88-1203 dated 30 December 1988 on fermented milks and yogurt, published in Journal Officiel de la République Française dated 31 December 1988. it is also possible to refer to "Codex Alimentarius" (prepared by Codex Alimentarius Commission under the aegis of FAO and WHO, and published by the FAO Information Division, available online at http://www.codexalimentarius.net; see more specifically volume 12 of Codex Alimentarius "Codex standards for milk and milk products", and the standard "CODEX STAN A -1 1(a)-1975").

The term "fermented milk" is thus reserved in the present application for dairy products prepared with a dairy substrate which has undergone a treatment at least equivalent to pasteurisation, inoculated with micro-organisms belonging to the characteristic species of each product. A "fermented milk" has not undergone any treatment making it possible to extract a constituent part of the dairy substrate used, and particularly has not undergone draining of the coagulum. The coagulation of "fermented milks" should not be obtained by means other than those resulting from the activity of the micro-organisms used. Therefore, the term "fermented milk" is generally used to refer to fermented milks other than yogurts, and may, depending on the country, be known as "Kefir", "Kumiss", "Lassi", "Dahi", "Leben", "Filmjôlk" , "Villi", "Acidophilus milk" for example. The term milk refers to cow's, goat's, sheep's, buffalo's, mare's, camel's, donkey's milk. Preferentially, the term milk refers to cow's milk.

The "yogurt" is reserved for fermented milk obtained, depending on local and constant practices, by the development of specific thermophilic lactic bacteria known as Lactobacillus bulgaricus and Streptococcus thermophilus, which should be found live in the finished product, at a rate of at least 10 million bacteria per gram with reference to the milk part. In some countries, the regulations authorise the addition of other lactic bacteria in yogurt production, particularly the additional use of Bifidobacterium and/or Lactobacillus acidophilus and/or Lactobacillus casei strains. These additional lactic strains are intended to give the finished product various properties, such as the property to promote intestinal flora balance, or modulate the immune system.

The quantity of free lactic acid contained in the fermented dairy substrate must not be less than 0.6 g per 100 g at the time of sale to the consumer, and the protein content supplied by the milk part must not be less than that of a normal milk.

The term "cream cheese" or "petit-suisse cheese" is, in the present application, reserved for an unripened, unsalted cheese, which has undergone fermentation by lactic bacteria only (no fermentation other than lactic fermentation). The dry matter content of cream cheeses may be lowered to 15 g or 10 g per 100 g of cream cheese, depending on whether their fat content is 25% greater at 20 g, or at most equal to 20 g, per 100 g of cream cheese, after complete drying. The dry matter content of a cream cheese is between 13 and 20%. The dry matter content of a petit-suisse cheese is not less than 23 g per 100 g of petit-suisse cheese. It is generally between 25 and 30%. Cream cheese and petit-suisse cheese are generally grouped together under the term "fromage frais" used conventionally in the technical field of the present invention.

In a specific embodiment, the present invention relates to a fresh dairy product with fruit containing
a) between 2 and 6% by weight of acacia gum, with respect to the total weight of the fresh dairy product with fruit, advantageously between 4 and 6% by weight of acacia gum, and
b) between 0.1 and 1% by weight of non-hydrosoluble cellulose fibre, advantageously wheat fibre, with respect to the total weight of the fresh dairy product with fruit.

Advantageously, the fresh dairy product with fruit according to the present invention is chosen from yogurts, drinking yogurts, fromage frais and fermented milks, advantageously it consists of a stirred yogurt.

Advantageously, the fruit is chosen from the group consisting of apple, orange, red berries, strawberry, peach, apricot, plum, raspberry, blackberry, redcurrant, lemon, grapefruit, banana, pineapple, kiwi, pear, cherry, coconut, passion fruit, mango, fig, rhubarb, melon, tropical fruit, litchi, grapes, blueberry and mixtures thereof.

In an advantageous embodiment, the fresh dairy product with fruit according to the invention, displays a viscosity, measured at a temperature of 10°C and at shearing of 64 s⁻¹, less than 2000 mPa.s, advantageously less than 1500 mPa.s, and advantageously less than 600 mPa.s. This viscosity is measured for example using a Rheometric Scientific Rheomat 180 viscosimeter.

Advantageously, the fat content thereof is between 0 and 8% by weight, with respect to the total weight of the fresh dairy product with fruit, advantageously between 3 and 5% by weight with respect to the total weight of the fresh dairy product with fruit.

The term "fat" refers to fatty substances (fats, oils) contained in the foods. The fat content is measured with respect to the weight of the finished product.

According to the present invention, the term "shearing" refers to a shearing rate expressed advantageously in s⁻¹.

Advantageously, the fresh dairy product with fruit, according to the invention, displays a separated liquid phase content of less than 5%, advantageously less than 3%, advantageously less than 1% by weight with respect to the total weight of the fresh dairy product with fruit.

The term "separated liquid phase" refers to the transparent phase appearing at the bottom of the container when approaching the use by date after 20 to 28 days of storage of the product.

The "separated liquid phase content" corresponds to the quantity of liquid present at the end of use by dates at the bottom of the container.

A product having a separated liquid phase content less than 5% is considered to be a stable product as there is practically no phase separation.
In this way, advantageously, the fresh dairy product with fruit according to the invention is stable at 10°C for at least 28 days.

The present invention also relates to a preparation process of a fresh dairy product with fruit according to the invention, comprising an incorporation step in a fresh dairy product, of a fruit preparation according to the invention, advantageously of 25% by weight of said fruit preparation with respect to the total weight of the fresh dairy product with fruit.

The present invention also discloses a fresh dairy product with fruit obtainable by using the process according to the invention.

The present invention finally relates to the use of a co-dried mixture comprising between 5 and 30% by weight of non-hydrosoluble cellulose fibre, advantageously wheat fibre, with respect to the total weight of the mixture and between 70 and 95% by weight of acacia gum with respect to the total weight of the mixture, advantageously 80% by weight of non-hydrosoluble cellulose fibre and 20% by weight of acacia gum, as a stabiliser of a fruit preparation containing acacia gum.

Advantageously, the viscosity of an aqueous 15% dispersion by weight of said co-dried mixture is greater than 3000 mPa.s at a temperature of 20°C and shearing of 10 s⁻¹;

This viscosity is measured for example using a Rheometric Scientific Rheomat 180 viscosimeter.

The present invention will be understood more clearly in light of the examples hereinafter:

### Example 1: Strawberry preparation:

The following formula was used. This fruit preparation contains approximately 12% acacia gum and 12% polydextrose:

| | |
|---|---|
| IQF* strawberries (pieces) | 40.0% |
| Sucrose | 11.6% |
| Isoglucose syrup | 2.7% |
| Polydextrose | 13.35% |
| Acacia gum | 6.8% |
| Acacia / wheat fibre system (Equacia 80/20**) | 6.5% |
| Acidifier, colorant, flavouring, water | q.s.100% |

| | |
|---|---|
| * IQF means "Individually Quickly Frozen" ** Equacia ® 80/20 corresponds to the ingredient in the Equacia® range consisting of 80% acacia gum and 20% cellulose fibre. | |

The acacia gum used is CNI reference Fibregum B.

The polydextrose is Tate & Lyle reference Stalite 370.

Fruit preparation obtention process:

This process comprises the following steps:
- Heating the strawberries at 85°C
- Adding a mixture comprising the sugars, polydextrose, acacia gum and some (approximately 40%) of the acacia / wheat fibre system.
- Dispersing in water at 50°C the remainder (approximately 60%) of the acacia / wheat fibre system, and incorporating said dispersion in the fruit, and heating the whole at 85°C.
- During cooling, adding colorant, flavouring and acidifier.

This fruit preparation has a satisfactory texture (CENCO = 8 on D + 1), and a satisfactory stability during storage at 10°C for 8 weeks at a laboratory scale.

### Example 2: Fruit yogurt production:

By mixing with a natural stirred yogurt, in proportions of 75% yogurt / 25% fruit preparation according to example 1, it is possible to obtain a stirred fruit yogurt containing 6% fibre, including 3% acacia gum.

The stirred yogurt manufacturing process used for this embodiment is that conventionally used by those skilled in the art (see in particular the publication Bactéries Lactiques et Probiotiques; F.M Luquet et al.; 2004).

The texture of the yogurt corresponds well to that of a normal stirred yogurt.

The organoleptic properties of the yogurt were deemed satisfactory by a panel of untrained tasters.

The stability of the yogurt during storage at 10°C for 28 days is satisfactory.

### Example 3: Other strawberry preparation formulation:

The following formula was used. This fruit preparation contains more than 20% by weight of acacia gum:

| | |
|---|---|
| IQF* strawberries (pieces) | 40.0% |
| Sucrose | 11.6% |
| Isoglucose syrup | 2.7% |
| Acacia gum (CNI Fibregum B) | 12.5% |
| Acacia/wheat fibre system (Equacia® 90/10**) | 10.0% |
| Acidifier, colorant, flavouring + water q.s. | 100% |

| | |
|---|---|
| * IQF means "Individually Quickly Frozen" ** Equacia ® 90/10 corresponds to the ingredient in the Equacia range consisting of 90% acacia gum and 10% cellulose fibre. | |

Therefore, the fruit preparation comprises 21.5% by weight of acacia gum and 1% by weight of non-hydrosoluble cellulose fibre with respect to the total weight of the fruit preparation.

The fruit preparation obtention process comprises the following steps:
- Heating the strawberries at 85°C;
- Adding a mixture comprising the sugars and some (approximately 60%) of the acacia gum;
- Dispersing in water at 50°C the acacia/wheat fibre system and the remainder of the acacia gum, and incorporating said dispersion in the fruit, and heating the whole at 85°C;
- During cooling, adding colorant, flavouring and acidifier.

This fruit preparation has a satisfactory texture (CENCO = 9 at D + 1), and a satisfactory stability during storage at 10°C for 8 weeks at a laboratory scale. Under these conditions, the separated liquid phase content is less than 3%.

### Example 4: Strawberry yogurts:

By mixing with a natural stirred yogurt, in proportions of 75% yogurt / 25% fruit preparation according to example 3, it is possible to obtain a stirred fruit yogurt containing more than 5% acacia gum (in this specific case, the proportion of acacia gum was 5.37%). The stirred yogurt manufacturing process used for this embodiment is that conventionally used by those skilled in the art (see in particular the publication Bactéries Lactiques et Probiotiques; F.M Luquet et al.; 2004).

## Claims

1. Stable fruit preparation containing :
A) between 10 and 22% by weight of acacia gum with respect to the total weight of the fruit preparation and
B) between 0.5 and 3% by weight of non-hydrosoluble cellulose fibre with respect to the total weight of the fruit preparation, co-dried with acacia gum

2. Fruit preparation according to claim 1, **characterised in that** the non-hydrosoluble cellulose fibre is chosen from wheat, cotton and wood fibre and mixtures thereof, advantageously wheat fibre.

3. Fruit preparation according to any of the above claims, **characterised in that** it contains less than 5% separated liquid phase after 8 weeks at 10°C.

4. Fruit preparation according to any of the above claims, **characterised in that** it displays a texture, measured, at 20°C, using a CENCO texturometer between 5 and 15, preferentially between 5 and 12.

5. Fruit preparation according to any of the above claims, **characterised in that** it also comprises sugar or a sweetener and possibly non-cellulose fibre other than acacia gum, a colorant, flavouring and/or acidifier.

6. Process to manufacture a fruit preparation according to any of claims 1 to 5, **characterised in that** it comprises the following steps:
- a) heating of the fruit at a temperature between 50 and 70°C,
- b) addition of the following ingredients:
- if required, sugar or sweetener, advantageously in the form of powder or syrup
- a co-dried mixture comprising between 5 and 30% by weight of non-hydrosoluble cellulose fibre with respect to the total weight of the mixture, advantageously 20% by weight, and between 70 and 95% by weight of acacia gum with respect to the total weight of the mixture, advantageously 80% by weight, optionally and partly in the form of powder and/or advantageously in the form of a dispersion in water heated at a temperature between 40 and 70°C, advantageously between 50 and 60°C, or more advantageously at a temperature of 50°C.
- water, if required.
- the remainder of the acacia gum, and, if required, the other non-cellulose fibre, advantageously in the form of powder or concentrated solution
- c) heating of the product obtained in step (b) at a temperature between 70 and 95°C, advantageously between 80 and 90°C, more advantageously at a temperature of 85°C for 3 to 30 minutes, advantageously 5 minutes.
- d) cooling of the mixture obtained in step (c) and
- e) addition of colorant, flavouring and/or acidifier, if required.

7. Use of the fruit preparation according to any of claims 1 to 5, for the manufacture of a food product containing acacia gum and non-hydrosoluble cellulose fibre.

8. Use according to claim 7, **characterised in that** the food product consists in a fresh dairy product with fruit, a fermented vegetable product with fruit or a combination thereof, advantageously a fresh dairy product with fruit.

9. Fresh dairy product with fruit obtainable by the process comprising an incorporation step in a fresh dairy product, of a stable fruit preparation according to any of claims 1 to 5, said fresh dairy product with fruit containing:
a) between 2 and 6% by weight of acacia gum, with respect to the total weight of the fresh dairy product with fruit, advantageously between 4 and 6% by weight of acacia gum, and
b) between 0.1 and 1% by weight of non-hydrosoluble cellulose fibre, advantageously wheat fibre, with respect to the total weight of the fresh dairy product with fruit.

10. Fresh dairy product with fruit according to claim 9, **characterised in that** it is chosen from yogurts, drinking yogurts, fromage frais and fermented milks, advantageously it consists of a stirred yogurt.

11. Fresh dairy product with fruit according to any of claims 9 or 10, **characterised in that** the fruit is chosen from the group consisting of apple, orange, red berries, strawberry, peach, apricot, plum, raspberry, blackberry, redcurrant, lemon, grapefruit, banana, pineapple, kiwi, pear, cherry, coconut, passion fruit, mango, fig, rhubarb, melon, tropical fruit, litchi, grapes, blueberry or mixtures thereof.

12. Fresh dairy product with fruit according to any of claims 9 to 11, **characterised in that** it displays a viscosity, measured at a temperature of 10°C and at shearing of 64 s⁻¹, less than 2000 mPa.s, advantageously less than 1500 mPa.s, and advantageously less than 600 mPa.s.

13. Fresh dairy product with fruit according to any of claims 9 to 12, **characterised in that** the fat content thereof is between 0 and 8% by weight, with respect to the total weight of the fresh dairy product with fruit, advantageously between 3 and 5% by weight with respect to the total weight of the fresh dairy product with fruit.

14. Fresh dairy product with fruit according to any of claims 9 to 13, **characterised in that** the separated liquid phase content thereof is less than 5%, advantageously less than 3%, advantageously less than 1% by weight with respect to the total weight of the fresh dairy product with fruit.

15. Use of a co-dried mixture comprising between 5 and 30% by weight of non-hydrosoluble cellulose fibre, advantageously wheat fibre, with respect to the total weight of the mixture and between 70 and 95% by weight of acacia gum with respect to the total weight of the mixture, as a stabiliser of a fruit preparation containing acacia gum.

16. Use according to claim 15, **characterised in that** the viscosity of an aqueous 15% dispersion by weight of said co-dried mixture is greater than 3000 mPa.s at a temperature of 20°C and shearing of 10 s⁻¹.

17. Use according to claim 15 or 16, **characterised in that** the co-dried mixture comprises 20% by weight of non-hydrosoluble cellulose fibre with respect to the total weight of the mixture and 80% by weight of acacia gum with respect to the total weight of the mixture.

## Patentansprüche

1. Stabiles Fruchtpräparat umfassend:
A) Zwischen 10 und 22 Gew.-% Akaziengummi bezüglich des Gesamtgewichts des Fruchtpräparats und
B) Zwischen 0.5 und 3 Gew.-% wasserunlösliche Zellulosefasern bezüglich des Gesamtgewichts des Fruchtpräparats, getrocknet zusammen mit Akaziengummi.

2. Fruchtpräparat nach Anspruch 1, **dadurch gekennzeichnet, dass** die wasserunlöslichen Zellulosefasern aus Weizen-, Baumwolle- und Holzfasern und Mischungen davon, bevorzugt aus Weizenfasern ausgewählt sind.

3. Fruchtpräparat nach einem der vorherigen Ansprüche, **dadurch gekennzeichnet, dass** es weniger als 5 % getrennte flüssige Phase nach 8 Wochen bei 10°C enthält.

4. Fruchtpräparat nach einem der vorherigen Ansprüche, **dadurch gekennzeichnet, dass** es gemessen bei 20°C und unter Verwendung eines CENCO Texturometers eine Struktur zwischen 5 und 15, bevorzugt zwischen 5 und 12 darstellt.

5. Fruchtpräparat nach einem der vorherigen Ansprüche, **dadurch gekennzeichnet, dass** es auch Zucker oder einen Süßstoff und eventuell nicht zellförmige Fasern, die sich von Akaziengummi unterscheiden, einen Farbstoff, Aroma und/oder Säuerungsmittel umfasst.

6. Verfahren zum Herstellen eines Fruchtpräparats nach einem der Ansprüche 1 bis 5, **dadurch gekennzeichnet, dass** es die folgenden Schritte umfasst:
- a) Erhitzen der Frucht auf eine Temperatur zwischen 50 und 70°C,
- b) Hinzufügen der folgenden Zutaten:
- bei Bedarf, Zucker oder Süßstoff, bevorzugt in Form von Puder oder Sirup
- eine zusammen getrocknete Mischung umfassend zwischen 5 und 30 Gew.-% wasserunlöslicher Zellulosefasern bezüglich des Gesamtgewichts der Mischung, bevorzugt 20 Gew.-%, und zwischen 70 und 95 Gew.-% Akaziengummi bezüglich des Gesamtgewichts der Mischung, bevorzugt 80 Gew.-%, optional und teilweise in Form von Puder und/oder bevorzugt in Form einer Dispersion in Wasser, das auf eine Temperatur zwischen 40 und 70°C, bevorzugt zwischen 50 und 60°C, besonders bevorzugt auf eine Temperatur von 50°C erhitzt ist.
- Bei Bedarf, Wasser.
- Der Rest des Akaziengummis, und bei Bedarf die verbleibenden nicht zellförmigen Fasern, bevorzugt in Form von Puder oder konzentrierter Lösung
- c) Erhitzen des in Schritt (b) erhaltenen Produkts auf eine Temperatur zwischen 70 und 95°C, bevorzugt zwischen 80 und 90 °C, besonders bevorzugt auf eine Temperatur von 85°C für 3 bis 30 Minuten, bevorzugt für 5 Minuten.
- d) Abkühlen der in Schritt (c) erhaltenen Mischung
- e) Bei Bedarf, Hinzufügen von Farbstoff, Aroma und/oder Säuerungsmittel.

7. Verwendung des Fruchtpräparats nach einem der Ansprüche 1 bis 5 zur Herstellung eines Nahrungsmittelprodukts, das Akaziengummi und wasserunlösliche Zellulosefasern enthält.

8. Verwendung nach Anspruch 7, **dadurch gekennzeichnet, dass** das Nahrungsmittelprodukt aus einem Frischmilchprodukt mit Frucht, einem fermentierten Gemüseprodukt mit Frucht oder einer Kombination davon, bevorzugt aus einem Frischmilchprodukt mit Frucht besteht.

9. Frischmilchprodukt mit Frucht, erhältlich durch das Verfahren nach einem der Ansprüche 1 bis 5, das einen Aufnahmeschritt eines stabilen Fruchtpräparats in ein Frischmilchprodukt umfasst, wobei das Frischmilchprodukt mit Frucht enthält:
a) Zwischen 2 und 6 Gew.-% Akaziengummi bezüglich des Gesamtgewichts des Frischmilchprodukts mit Frucht, bevorzugt zwischen 4 und 6 Gew.-% Akaziengummi, und
b) Zwischen 0.1 und 1 Gew.-% wasserunlöslicher Zellulosefasern, bevorzugt Weizenfasern bezüglich des Gesamtgewichts des Frischmilchprodukts mit Frucht.

10. Frischmilchprodukt mit Frucht nach Anspruch 9, **dadurch gekennzeichnet, dass** es aus Joghurt, Trinkjoghurts, Frischkäse und fermentierter Milch gewählt wird und bevorzugt aus einem gerührten Joghurt besteht.

11. Frischmilchprodukt mit Frucht nach einem der Ansprüche 9 oder 10, **dadurch gekennzeichnet, dass** die Frucht aus der Gruppe bestehend aus Apfel, Orange, roten Beeren, Erdbeere, Pfirsich, Aprikose, Pflaume, Himbeere, Brombeere, Johannisbeere, Zitrone, Grapefruit, Banane, Ananas, Kiwi, Birne, Kirsche, Kokosnuss, Passionsfrucht, Mango, Feige, Rhabarber, Melone, tropische Früchte, Litschi, Traube, Heidelbeere oder Mischungen davon ausgewählt wird.

12. Frischmilchprodukt mit Frucht nach einem der Ansprüche 9 oder 11, **dadurch gekennzeichnet, dass** es gemessen bei einer Temperatur von 10°C und einer Scherung von 64 s⁻¹, eine Viskosität von weniger als 2000 mPas, bevorzugt weniger als 1500 mPas, und bevorzugt weniger als 600 mPas aufweist.

13. Frischmilchprodukt mit Frucht nach einem der Ansprüche 9 oder 12, **dadurch gekennzeichnet, dass** dessen Fettgehalt zwischen 0 und 8 Gew.-% bezüglich des Gesamtgewichts des Frischmilchprodukts mit Frucht, bevorzugt zwischen 3 und 5 Gew.-% bezüglich des Gesamtgewichts des Frischmilchprodukts mit Frucht beträgt.

14. Frischmilchprodukt mit Frucht nach einem der Ansprüche 9 oder 13, **dadurch gekennzeichnet, dass** dessen getrennter flüssiger Phasengehalt weniger als 5 Gew.-%, bevorzugt weniger als 3 Gew.-%, bevorzugt weniger als 1 Gew.-% bezüglich des Gesamtgewichts des Frischmilchprodukts mit Frucht beträgt.

15. Verwendung einer zusammen getrockneten Mischung, die zwischen 5 und 30 Gew.-% wasserunlösliche Zellulosefasern, bevorzugt Weizenfasern, bezüglich des Gesamtgewichts der Mischung, und zwischen 70 und 95 Gew.-% Akaziengummi bezüglich des Gesamtgewichts der Mischung umfasst, als ein Stabilisator eines Akaziengummi enthaltenden Fruchtpräparats.

16. Verwendung nach Anspruch 15, **dadurch gekennzeichnet, dass** die Viskosität einer wässrigen Dispersion mit 15 Gew.-% der zusammen getrockneten Mischung bei einer Temperatur von 20°C und Scherung von 10 s⁻¹ größer als 3000 mPas ist.

17. Verwendung nach Anspruch 15 oder 16, **dadurch gekennzeichnet, dass** die zusammen getrocknete Mischung 20 Gew.-% wasserunlösliche Zellulosefasern bezüglich des Gesamtgewichts der Mischung, und 80 Gew.-% Akaziengummi bezüglich des Gesamtgewichts der Mischung umfasst.

## Revendications

1. Préparation de fruits stable, contenant :
A) entre 10 et 22 % en poids de gomme d'acacia par rapport au poids total de la préparation de fruits et
B) entre 0,5 et 3 % en poids de fibres cellulosiques non hydrosolubles par rapport au poids total de la préparation de fruits, co-séchées avec la gomme d'acacia.

2. Préparation de fruits selon la revendication 1, **caractérisée en ce que** les fibres cellulosiques non hydrosolubles sont choisies parmi les fibres de blé, de coton et de bois et leurs mélanges, avantageusement les fibres de blé.

3. Préparation de fruits selon l'une quelconque des revendications précédentes, **caractérisée en ce qu'**elle contient moins de 5 % d'une phase liquide séparée après 8 semaines à 10°C.

4. Préparation de fruits selon l'une quelconque des revendications précédentes, **caractérisée en ce qu'**elle présente une texture, mesurée à 20°C à l'aide d'un texturomètre CENCO, située entre 5 et 15, préférentiellement entre 5 et 12.

5. Préparation de fruits selon l'une quelconque des revendications précédentes, **caractérisée en ce qu'**elle comprend en outre un sucre ou un édulcorant et éventuellement des fibres non cellulosiques autres que la gomme d'acacia, un colorant, un arôme et/ou un acidifiant.

6. Procédé de fabrication d'une préparation de fruits selon l'une quelconque des revendications 1 à 5, **caractérisé en ce qu'**il comprend les étapes suivantes :
- a) le chauffage des fruits à une température située entre 50°C et 70°C,
- b) l'ajout des ingrédients suivants :
- si nécessaire, un sucre ou un édulcorant, avantageusement sous la forme d'une poudre ou d'un sirop
- un mélange co-séché comprenant entre 5 et 30 % en poids de fibres cellulosiques non hydrosolubles par rapport au poids total du mélange, avantageusement 20 % en poids, et entre 70 et 95 % en poids de gomme d'acacia par rapport au poids total du mélange, avantageusement 80 % en poids, optionnellement et en partie sous la forme d'une poudre et/ou avantageusement sous la forme d'une dispersion dans de l'eau chauffée à une température située entre 40°C et 70°C, avantageusement entre 50°C et 60°C, encore plus avantageusement à une température de 50°C.
- de l'eau, si nécessaire.
- le reste de la gomme d'acacia et, si nécessaire, les autres fibres non cellulosiques, avantageusement sous la forme d'une poudre ou d'une solution concentrée
- c) le chauffage du produit obtenu dans l'étape (b) à une température située entre 70°C et 95°C, avantageusement entre 80°C et 90°C, encore plus avantageusement à une température de 85°C pendant 3 à 30 minutes, avantageusement pendant 5 minutes.
- d) le refroidissement du mélange obtenu dans l'étape (c) et
- e) si nécessaire, l'ajout d'un colorant, d'un arôme et/ou d'un acidifiant.

7. Utilisation de la préparation de fruits selon l'une quelconque des revendications 1 à 5, pour la fabrication d'un produit alimentaire contenant de la gomme d'acacia et des fibres cellulosiques non hydrosolubles.

8. Utilisation selon la revendication 7, **caractérisée en ce que** le produit alimentaire consiste en un produit laitier frais aux fruits, un produit végétal fermenté aux fruits ou une combinaison des deux, avantageusement un produit laitier frais aux fruits.

9. Produit laitier frais aux fruits pouvant être obtenu par le procédé comprenant une étape d'incorporation, dans un produit laitier frais, d'une préparation de fruits stable selon l'une quelconque des revendications 1 à 5, ledit produit laitier frais aux fruits contenant :
a) entre 2 et 6 % en poids de gomme d'acacia, par rapport au poids total du produit laitier frais aux fruits, avantageusement entre 4 et 6 % en poids de gomme d'acacia, et
b) entre 0,1 et 1 % en poids de fibres cellulosiques non hydrosolubles, avantageusement des fibres de blé, par rapport au poids total du produit laitier frais aux fruits.

10. Produit laitier frais aux fruits selon la revendication 9, **caractérisé en ce qu'**il est choisi parmi les yaourts, les yaourts à boire, les fromages frais et les laits fermentés, avantageusement il consiste en un yaourt brassé.

11. Produit laitier frais aux fruits selon l'une quelconque des revendications 9 ou 10, **caractérisé en ce que** le fruit est choisi dans le groupe consistant en la pomme, l'orange, des fruits rouges, la fraise, la pêche, l'abricot, la prune, la framboise, la mure, la groseille, le citron, le pamplemousse, la banane, l'ananas, le kiwi, la poire, la cerise, la noix de coco, des fruits de la passion, la mangue, la figue, la rhubarbe, le melon, le fruit exotique, le litchi, le raisin, la myrtille ou leurs mélanges.

12. Produit laitier frais aux fruits selon l'une quelconque des revendications 9 à 11, **caractérisé en ce qu'**il présente une viscosité, mesurée à une température de 10°C et à un cisaillement de 64 s⁻¹, inférieure à 2000 mPa.s, avantageusement inférieure à 1500 mPa.s, et de façon avantageuse inférieure à 600 mPa.s.

13. Produit laitier frais aux fruits selon l'une quelconque des revendications 9 à 12, **caractérisé en ce que** sa teneur en matière grasse est située entre 0 et 8 % en poids, par rapport au poids total du produit laitier frais aux fruits, avantageusement entre 3 et 5 % en poids par rapport au poids total du produit laitier frais aux fruits.

14. Produit laitier frais aux fruits selon l'une quelconque des revendications 9 à 13, **caractérisé en ce que** sa teneur en phase liquide séparée est inférieure à 5 %, avantageusement inférieure à 3 %, de façon avantageuse inférieure à 1 % en poids par rapport au poids total du produit laitier frais aux fruits.

15. Utilisation d'un mélange co-séché comprenant entre 5 et 30 % en poids de fibres cellulosiques non hydrosolubles, avantageusement des fibres de blé, par rapport au poids total du mélange et entre 70 et 95 % en poids de gomme d'acacia par rapport au poids total du mélange, en tant que stabilisant d'une préparation de fruits contenant de la gomme d'acacia.

16. Utilisation selon la revendication 15, **caractérisée en ce que** la viscosité d'une dispersion aqueuse à 15 % en poids dudit mélange co-séché est supérieure à 3000 mPa.s à une température de 20°C et à un cisaillement de 10 s⁻¹.

17. Utilisation selon la revendication 15 ou 16, **caractérisée en ce que** le mélange co-séché comprend 20 % en poids de fibres cellulosiques non hydrosolubles par rapport au poids total du mélange et 80 % en poids de gomme d'acacia par rapport au poids total du mélange.
